# EUROPEAN PATENT APPLICATION

(11) **EP 4 273 901 A1**
(43) Date of publication of application: **08.11.2023**
(21) Application number: 22172143.4
(22) Date of filing: 06.05.2022
(51) Int. Cl.: H01H 71/00, H02J 13/00

(54) **METHOD AND SYSTEM FOR CIRCUIT BREAKER CONTROL IN AN AIR VEHICLE**

(71) Applicant: Lilium eAircraft GmbH, 82234 Wessling (DE)
(72) Inventor: Treyvas, Igor, 80469 München (DE); Krishnankutty Lathika, Sreejesh, 82205 Gilching (DE)
(74) Representative: Grünecker Patent- und Rechtsanwälte PartG mbB

(57) **Abstract**

The present invention relates to systems and methods for simplified, more efficient and more reliable aircraft control. In particular, the present invention relates to more efficient use of display capabilities, in particular, of interactive displays in monitoring, control, and operation of aircraft systems. According to a particular aspect, a common operation of groups of circuit breakers in an aircraft electrical system, preferably by means of an interactive display, is provided. The interactive display may be hierarchically organized into plural levels of display windows showing different levels of detail. In accordance with another particular aspect, a general synoptics summary display showing a status overview of all aircraft systems on a single display window is provided.

## Description

### FIELD OF THE INVENTION

The present invention relates to operation of aircraft systems. More specifically, the present invention relates to a method and system for operating circuit breakers in aircraft operation.

### BACKGROUND ART

In aircraft operation, it is generally desirable to conduct any pilot actions as efficiently as possible. This holds, in particular, for aircraft control during flight, but is equally applicable to other phases such as pre-flight checklist procedures and system monitoring.

A major reason is that pilot actions in air vehicles are often time critical and the allowable workload on the pilot is limited. Further, the space available for the equipment necessary for monitoring and operation in an aircraft's cockpit is generally limited. Any available space for operation equipment as well as for equipment for providing any desired and, in particular, critical information such as displays should therefore be used as efficiently as possible.

On the other hand, aircraft systems are generally rather complex systems. This holds, in particular, for aircraft electrical systems. Aircraft electrical systems become particularly complex in modern aircrafts that required a lot of electrical power redundancy, and specifically in electrically propelled aircrafts, which started to popularize in recent years.

An aircraft electrical system generally includes a large amount of individual sub-systems such as avionics, thermal management (air conditioning), lighting, energy storage systems (ESS) and others. In case of electrically propelled aircraft, the propulsion sub-system is, of course, an additional crucial sub-system of the electrical system of the aircraft.

For safety reasons as well as others, it is desirable that individual components of the electrical aircraft system can be safely controlled to be connected and disconnected to the aircraft electrical system as desired. A respective functionality is generally implemented by means of circuit breakers (CBs).

In view of the complexity of an aircraft electrical system, the amount of circuit breakers in an aircraft is generally rather numerous, i.e. it is in the order of hundreds. Therefore, individual circuit breakers are assigned respective IDs (unique numbers of typically at least 4 digits).

On this basis, conventionally circuit breakers in aircraft systems are controlled through a dedicated display that contains a long list of all available CBs. Each circuit breaker has a number and a name. Every time a pilot wants to operate a CB, he must type its unique number in the search bar of the page or search through the list of CBs. In complex systems, powered by many CBs, the pilot must enter one by one all relevant CBs numbers for deactivating the system. This procedure is highly time and workload consuming and is, moreover, prone to mistakes due to a wrong typing of the numbers. This situation is further escalated in times of emergency when multiple actions should be done in short time and its important for the pilot to have good situational awareness of the condition of the aircraft and, among others, the state of relevant electrical equipment in a consolidated way.

An additional problem occurring in this connection is that activation/deactivation of a system comprising a plurality of circuit breakers cannot take place instantaneously due to the delay caused by operating the individual circuit breakers one by one. On the other hand, certain system components should not be operated under partial power supply, so that even damages cannot be excluded with the conventional circuit breaker operation.

### SUMMARY OF THE INVENTION

The present invention has been made to address the drawbacks of conventional systems discussed above and generally aims to provide more efficient display and operation systems for aircraft operation.

More specifically, the present invention aims to provide systems and methods for a more efficient and simplified circuit breaker control in aircraft electrical systems.

This is achieved by the features of the independent claims.

According to a first aspect of the present invention, a method of controlling circuit breakers of an electrical system of an aircraft is provided. The method comprises the step of controlling a group of a plurality of circuit breakers, so as to switch them in the "on"-state or the "off"-state together, with a single operation.

According to a second aspect of the present invention, an aircraft operation system that is configured to control circuit breakers of an electrical system of an aircraft, is provided. The system is configured to control a group of a plurality of circuit breakers, so as to switch them in the "on"-state or the "off"-state together, with a single operation.

It is the particular approach of the present invention to control circuit breakers of an aircraft electrical system not individually, but in predetermined groups. This does not only simplify operation but, at the same time, reduces operation time in time critical situations, thereby reducing the risk of delaying other time critical actions. Moreover, in embodiments, it may simplify the display of the power status of every equipment by presenting the line status - if its powered or not, even if partially, without redundancy. In terms of operation. Operation means can be simplified and the available space, in particular of displays in the field of view of the pilot, can be more efficiently used since it is unnecessary in normal operation to provide the pilot with a space consuming view of the system down to individual circuit breakers.

According to embodiments, the group of a plurality of circuit breakers that are controlled together includes a plurality of circuit breakers that are to be switched on or off together in flight operation. As indicated above, certain system components having a closely related functionality should not be switched on and off with considerable time delay because the respective components powered via these circuit breakers are not meant to be operated with partial power (e.g. components requiring high electrical consumption such as pumps or engines). In other words, it is desirable to switch these circuit breakers on or off at the same time in flight operation (both normal and abnormal situations such as emergencies). Another situation might occur during maintenance operations, for which additional measures may be foreseen.

In accordance with embodiments, the operation is implemented by an interactive display displaying a presentation of groups of circuit breakers to be operated by a single action, such as via a touch operation. In particular, the interactive display can be implemented by means of a touchscreen. This guarantees the operation of groups of circuit breakers together with a simple operation.

In embodiments, a display screen displaying a presentation of groups of circuit breakers to be operated by a single action can be switched to a display screen indicating individual circuit breakers, so that these can be individually operated, if so desired. As indicated, this may, for instance, be the case for certain maintenance procedures. At the same time, maintenance procedures are usually less time critical so that an individual operation does not affect safety.

More specifically, the interactive display may be configured to display hierarchically organized display screens, having a plurality of levels. In particular, on the first level display screen operable representations of aircraft sub-systems each having one or more groups of circuit breakers is indicated. Examples of such aircraft sub-systems are avionics, propulsion, heating and lights. The term "operable representation" is used in the present disclosure to mean a display element that a pilot (user) can interact with (in order to be "operated") such as a button (soft key) on a touchscreen. On a second display level, a display screen showing an operable representation of each of the groups of circuit breakers belonging to one of the aircraft sub-systems is indicated. Such a second level display screen corresponds to the above indicated display displaying a representation of a group of circuit breakers to be operated by a single action.

In embodiments of the hierarchically organized display screens, a switching is enabled to switch the display screen from the first to the second level by operating the representation of a respective aircraft sub-system. This means, when a particular display element such as a soft key designating, for instance, the avionics sub-system is operated (touched), the display screen switches to a second level display showing the groups of circuit breakers belonging to the respective sub-system, such as the avionics sub-system. A switching back the display screen from the second level to the first level can be implemented by means of another dedicated screen operation such as, for instance, pressing an "x" (cancel) symbol on the second level screen.

In specific embodiments, there may, additionally, be a third level display screen in the hierarchically organized display screens, which indicates individual circuit breakers of one or more groups, such as for maintenance purposes, as discussed above. Still more specifically, a switching between the second and third level display screens is enabled upon dedicated operations directly on the screen, such as by operating a display element arranged close to a particular group of circuit breakers on the second level screen and pressing a cancel symbol ("x") on the third level screen. It is noted that, as will be described in more detail below, a touch operation of an element representing a group of circuit breakers itself is preferably used for switching the respective group of circuit breakers between "on" and "off".

According to embodiments, the representations of the groups include an indication of status information of the respective group. More specifically, the status information includes an indication if at least one of the circuit breakers of the group has a different state than the others. For instance, this may include an indication that at least a minimum set of CB needed to provide power for full functionality of the equipment is connected (e.g. with no redundancy) or/and an indication that one or more CB is in "tripped" (off) state or out of operation, if the group is generally in "on" state. Also, a locked state of circuit breakers that are currently not operable may be indicated in this way.

In accordance with a further particular aspect of the present invention, an aircraft electrical network including the aircraft operation system according to the second aspect of the present invention or its embodiments, is provided.

In accordance with a still further particular aspect of the present invention, an aircraft comprising an aircraft electrical network according to the above further particular aspect is provided.

In embodiments, the aircraft is an electric vertical take-off and landing aircraft, eVTOL.

In accordance with still a further particular aspect of the present invention, a display device for indicating a consolidated monitoring view display screen is provided. The consolidated monitoring view provides an overview of the important information about an aircraft system including all its sub-systems on a single display screen. The consolidated monitoring view provides for switching to more detailed views of individual sub-systems as desired. In preferred embodiments, the consolidated monitoring view provides for certain operation functions interactively such as by touch operation of a display element.

In accordance with this aspect, time-consuming pilot operations (e.g. reviewing multiple pages to get situational awareness of aircraft state) are reduced, which enhances situational awareness and safety. Moreover, in view of the more efficiently used display space, size and number of displays in a cockpit can be reduced.

Further features and advantages of the present invention are set forth in dependent claims.

Embodiments and features of the present invention, herein described or set forth in the appended claims, may be combined unless it is obvious from the context that such a combination is not possible for particular embodiments or features.

### BRIEF DESCRIPTION OF THE DRAWINGS

Additional features and advantages of the present invention will become apparent in the following and more particular description as illustrated in the accompanying drawings, wherein:
Fig. 1 shows an example of an aircraft summary page for monitoring all relevant aircraft systems in a single display window of a graphical interface during a pre-flight ground phase;
Fig. 2 shows an example of an aircraft summary page for monitoring all relevant aircraft systems in a single display window of a graphical interface during a flight phase of climbing;
Fig. 3 is a high level overview screen of an interactive system for controlling circuit breakers of an aircraft according to embodiments of the present invention;
Fig. 4 is an operation screen for controlling groups of circuit breakers according to embodiments of the present invention; and
Fig. 5 shows an exemplary screen for operating individual circuit breakers according to embodiments of the present invention.

### DETAILED DESCRIPTION

The following description of particular embodiments serves for a more detailed explanation of the principles underlying the present invention. However, any details provided in the detailed description serve for illustration by means of example only and are not intended to limit the invention that is defined by the appended claims.

The present invention generally relates to methods and systems for improving operation of aircraft systems during flight of an aircraft and, in the pre-flight phase, such as when performing checklist operation and more efficiently using an aircraft's display capabilities, in particular of interactive displays.

An exemplary embodiment of the present disclosure provides all necessary information for monitoring all aircraft (sub-) systems relevant for a particular operation phase such as performing pre-flight checklist or in a particular flight phase in a single display window of a graphical user interface. Thereby the need to switch between various pages to gather the same information, is eliminated. Hence, pilot actions during the respective operation phase are reduced. In various embodiments, a summary window can be constantly displayed or can be displayed upon request once the pilot needs to understand the overview situation at a glance.

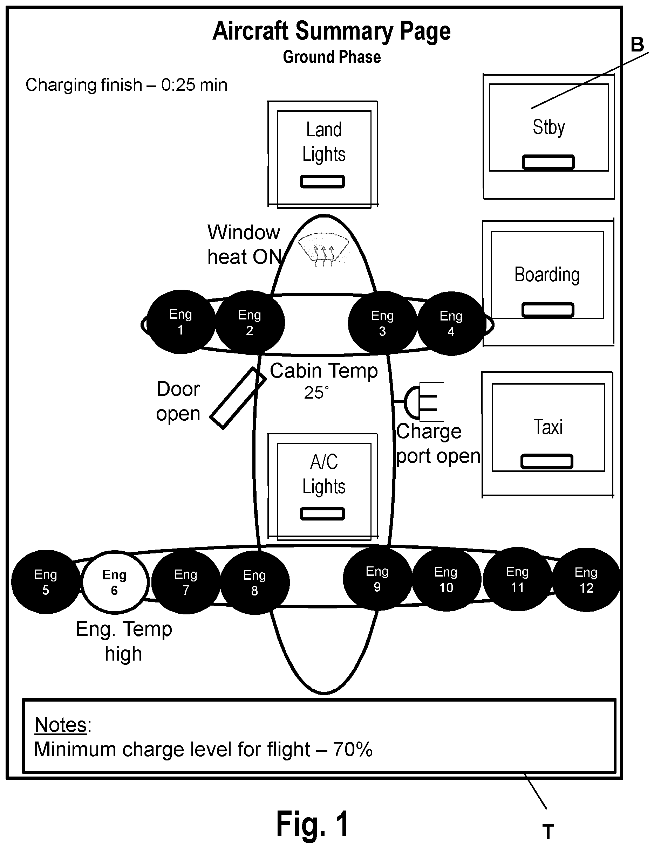

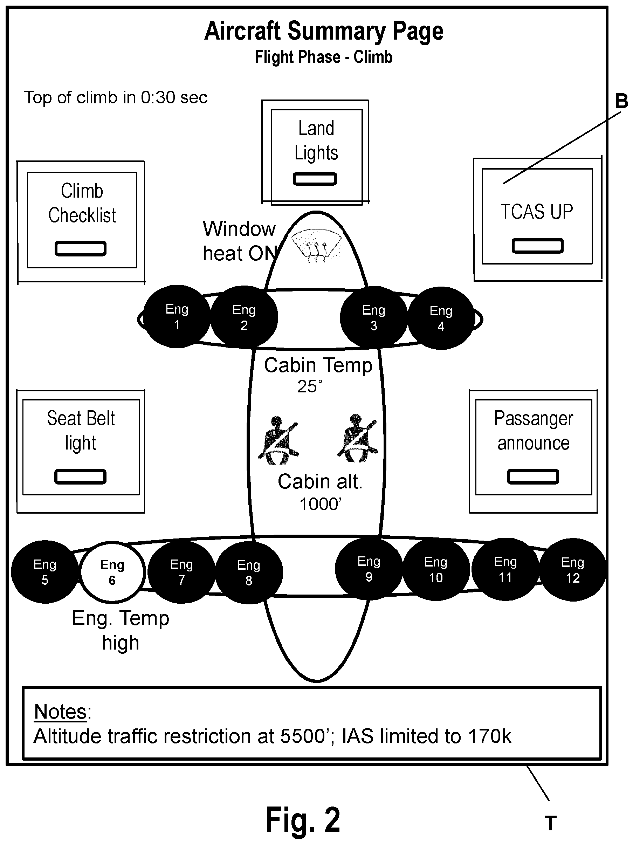

Examples of such summary windows ("Aircraft Summary Pages") are shown in Figs. 1 and 2. The windows will display normal and abnormal statuses and selections of the relevant aircraft systems. The systems and their relevant statuses will adjust for the specific flight phase according to what is important for the pilot to see or operate in each step.

Starting from the display in the summary window, a selection of a particular (sub-)system which is required to be shown in more detail can be made, upon what a respective detailed page (not shown in the drawings) of the (sub-) system can be displayed, as required by the pilot.

The idea behind this exemplary embodiment of the present disclosure can be summarized as follows.

Each aircraft (sub-)system traditionally is capable of displaying a dedicated synoptics page containing all relevant information of the system - both of high and low importance. For the pilot to understand the entire aircraft systems configuration relevant for a specific stage, such as pre-flight checklist operation or landing, the pilot has to know what he is looking for in the specific stage, that is, go over each of the synoptic pages and search for the relevant information. This action consumes a lot of time and produces cognitive load that is especially valuable in time critical situations such as takeoff, landing, emergencies. Lack of accessible information on critical phases can lead to wrong situation awareness of aircraft configuration and incorrect decision-making. In addition, the conventional solution forces the pilot to operate the displays to reach each page just to gather information (for example: check statuses as part of normal checklist procedure). During this process, the pilot's hand must be removed from aircraft controls leading to a reduction in safety and situational awareness.

Additionally, some operational scenarios require concurrent display of the data of two or more (sub-)systems of the overall aircraft. In conventional aircraft monitoring and operation systems, the necessary display of the individual synoptics pages of two or more aircraft systems requires using and occupying two displays, which limits the available number of displays left for other flight data required by the pilot. Accordingly, it becomes necessary to use larger displays or a larger number of displays in order to accommodate the operational needs in such cases. On the other hand, the data display is, in conventional systems, not adjusted to the particular required data on each flight stage.

According to embodiments of the present disclosure, a single synoptics page, such as the ones shown in Figs. 1 and 2, is capable of showing a considerable portion of the information necessary for operating the aircraft in the respective operation phase/flight phase (here: Ground Phase in Fig. 1 and Flight Phase of Climbing in Fig. 2). For instance, in examples, the single synoptics display page is capable of showing up to 80% of the information related to various aircraft sub-systems.

Hence, the consolidated monitoring view (synoptics summary) aspect of the present invention provides a pilot with the capability to perform checklist and monitoring tasks with less operation of the display system. This eliminates the need to go over multiple pages and relevant statuses just to find the appropriate one. Additionally, the system will change the displayed data according to the required phase. In other words, in each flight phase an automatic filtering is performed to display only the required data to the pilot. As a consequence, the pilot receives only the required set of parameters in a very simple way. With the introduction of one centralized place for all aircraft systems' statuses, the pilot's situational awareness of the aircraft configuration is enhanced.

This leads to an overall reduction of the required screen size and consequently to the required number of screens and/or required amount of display windows needed to allow the pilot to monitor and gather information of the aircraft systems.

The reduction of the number of displays required to be installed in the cockpit to perform pilot duties is particularly beneficial for electric air vehicles such as EVTOL (electrical vertical takeoff and landing) where weight and size are a major consideration.

Specifically, Fig. 1 shows an exemplary Aircraft Summary Page that provides a consolidated monitoring view during a pre-flight ground phase, i.e., for example, when a pre-flight checklist operation is made. Although the particular situation shown includes some specifics of electrically propelled air vehicles, the present disclosure is not generally limited to those. Preferably the view is provided on an interactive display (touchscreen) T. Information about plural sub-systems relevant in this phase is symbolically shown (window heat, door, charge port, engines). Some sub-systems (land lights, standby, boarding, taxi, A/C (anti-collision) lights) are indicated by means of respective buttons (softkeys) B. An operation (touching) thereof may switch the display to a detailed view of a respective sub system (not shown) or trigger an operation of the sub-system that is most common in a current flight situation. In addition, basic information can be shown directly on the button, such as by means of the bar like symbol on each of the buttons B which may change color or by showing symbols or short text messages (not shown in the drawing) on a button. In addition, some further relevant information can be shown as text messages on the page such as the remaining time until finishing the charging procedure or the indication of the minimum charge level for the planned flight (in the "notes" section on the bottom of the window). In the illustrated view, a warning is shown indicating that the temperature of one engine (engine 6) is high, which is accompanied by a color change of the respective engine. A skilled person is aware of the fact that the indicated information, symbols, exemplary sub-systems are merely exemplary and for illustration and can vary according to the circumstances such as type and size of aircraft and others. Also, the display itself is preferably a color display having sophisticated options for symbolizing status information by means of color which is not reflected in the black and white drawings of this disclosure.

In a similar manner, Fig. 2 shows an exemplary Aircraft Summary Page displayed during a flight phase of climbing, i.e. before the aircraft has reached the intended flight altitude. Generally, the same symbols represent same information as in Fig. 1 and the detailed description thereof is not repeated. In view of the operation phase being different, some other status information is now symbolized as compared to Fig. 1 (in particular: cabin altitude and seat belt status instead of door and charging port status). A cabin altitude of 1000' (feet) means that the pressure in the pressurized cabin corresponds to that on an altitude level of 1000' in reality. Exemplary buttons (soft keys) B are shown in Fig 2 for the sub systems of seat belt lights, climb checklist, land lights, TCAS (Travel Collision Avoidance System; TCAS UP means to avoid collisions with vehicles on upper levels during the climbing), and passenger announcements. Again an operation (touching) of a button B may either switch to a detailed view (not shown) or trigger a most common operation for the respective sub system in the current operation phase. For example, an operation of the "seat belt light" button may switch the seat belt indicators near the passengers' seats off, which is typically done towards the end of the climbing phase. Further information indicated by means of messages in Fig. 1 concern the remaining time until reaching the desired altitude ("top of climb"), here: in half a minute and, in the "notes" field near the bottom, an altitude traffic restriction and a limitation of the indicated airspeed (IAS) to 170k (knots). Again, neither the exemplary sub systems nor the kind and contents of indicated messages are limiting for the disclosure. For instance, a warning message if landing is required as soon as possible may be displayed, preferably in a respective warning color in an emergency situation on the Summary Page during each flight phase, either in a "notes" section or in any other suitable position.

Summarizing this aspect, the synoptics summary page summarizes the relevant systems' statuses as required to the specific flight phase (opposed to a constant amount of data displayed in a traditional synoptics page display for a particular aircraft (sub-)system). Links to specific synoptics pages (also called aircraft summary pages or consolidated monitoring views) and required actions can be achieved through the same page in a simple graphical way. Operating the aircraft using a consolidated system status is beneficial over the conventional way, since it saves pilot time and effort in going through individual synoptic pages what requires the pilot to search for the information instead of receiving the relevant information from the system.

In accordance with another particular aspect of the present disclosure, a more efficient use of available display capabilities (display space) is specifically applied to monitoring and operating of circuit breakers.

As indicated above, circuit breakers (CBs) play a significant role in aircraft systems for controlling and switching power supply in individual sub-systems. Their monitoring and control, in particular, switching control, is therefore an important task to be performed at any stage of aircraft operation, including normal flight operation as well as in abnormal (emergency) situations.

As indicated above, conventionally circuit breaker control is done through a dedicated display with a long list of all available circuit breakers. For operation, each of the circuit breakers to be operated must be individually searched for in the list, addressed, and operated.

The present invention provides a method for controlling circuit breakers of aircraft systems in a simplified and quick way by controlling entire groups of circuit breakers together instead of controlling individual circuit breakers.

Generally, aircraft electrical systems of any sub-systems of an overall aircraft system are often organized in a modular structure including so-called LRUs (Line Replaceable Unit). A Line Replaceable Unit comprises a plurality of components that are closely related to each other in functionality and are designed so as to be easily replaced together, as a whole module, in maintenance operations.

A possible example for a group of circuit breakers to be controlled and/or operated together is therefore a LRU. However, a group of CBs to be operated together in accordance with embodiments of the present disclosure is not limited to LRUs. Aircraft system components, including the respective circuit breakers are grouped into LRUs specifically for easy replacement during maintenance procedures, whereas the operation systems and methods provided by the present disclosure are foreseen for controlling an operation in all operational phases such as during flight as well as pre-flight and after landing operations. Hence, a group of circuit breakers to be operated together in accordance with embodiments of the present disclosure may be any group of circuit breakers, however, preferably those which have a specific functional and/or structural relation with each other that makes their operation in a single step beneficial or even desirable.

For instance, some system components of an aircraft must not be operated separately, i.e. switched to the "on" state or the "off" state individually, with a considerable delay between the individual operations, because this may lead to certain systems being operated under partial power supply, which may damage some system components. The present invention provides for a simple means for avoiding a situation, which may damage system components in this way, because the respective circuit breakers can be grouped together on a natural basis to form a group that is always operated together.

A respective operation of circuit breakers in groups rather than operating individual circuit breakers drastically reduces a pilot's workload by avoiding the need for recognizing and addressing all relevant CBs for the specific action and reducing the number of steps required to perform a procedure. Since pilot operation is highly sensitive to the workload he/she can handle, a consequence such as the decision of adding an additional pilot to the cockpit due to excessive workload can be avoided by the present invention.

Additionally, as indicated, this aspect reduces the amount of dedicated screen space required for CB control since the number of groups to be controlled together is significantly lower than the quantity of individual CBs. The reduced amount of displayed information allows for implementing a simplified graphical interface and search capability.

Nevertheless, the concept is, of course, not preventing display of data regarding individual CBs. If deemed necessary, a display on the basis of individual circuit breakers can still be provided to the pilot to allow complete situational awareness.

For example, for maintenance operation, additional information and control can be provided to allow maintenance activities requiring resolutions of any single CB for its operation.

Grouping circuit breakers together for operation and providing a respective operation interface such as an interactive display thus reduces time and cognitive load requirements to the pilot for accomplishing a procedure involving circuit breaker control. This enhances situational awareness, and flight safety. This holds, in particular, in emergency situations where CB control is required to be done as part of other emergency related actions, when the conventional approach produces the risk of delaying other time critical actions due to the delay in operating the CBs individually. An additional effect arises in situations where CB control is the only way to stop a process that jeopardizes the safety of flight (e.g. smoke/fire from electrical equipment that has to be disconnected as quickly as possible). Moreover, CB operation errors can be reduced since the error prone entering of long numbers for addressing individual CBs is reduced.

Hence, the present invention provides for electrical system interfaces concentrating CB control on a very limited display space. Additionally the approach takes into account limited pilot resources.

By controlling power of high level components by means of groups of circuit breakers rather than individual circuit breakers, a significant reduction of the display page size for circuit breaker operation and its complexity can be achieved. This leads to a simpler and more intuitive display. On the other hand, the required workload in the event that a control over multiple circuit breakers is required, is reduced considerably.

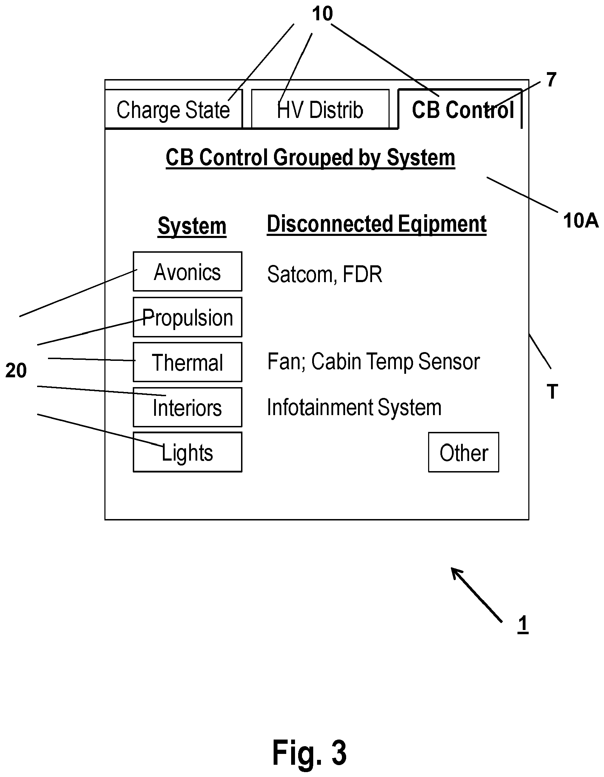

Individual examples of display pages, preferably interactive display pages, for circuit breaker monitoring and control will be explained below with reference to the drawings of Figs. 3 to 5.

Fig. 3 shows a general power page illustrating a simple system view and status of disconnected circuit breaker groups (for example: LRUs) in each of them.

The illustrated display screen has a plurality of tabs 10. In the given example, there are a Charge State, a HV (high-voltage) Distribution, and a CB control tab, respectively. However, the particular design and number of tabs in the present drawing are exemplary only and the present disclosure is not limited to them.

In any case, in accordance with embodiments allowing circuit breaker control, a respective display of CB related information should be made available. In the present example, a respective window 10A corresponding to the CB control tab is in the active state. The indicated view corresponds to a first level display screen 1 of hierarchically organized display screens according to embodiments of the present invention. In the present example, the display screen is intended to be shown on a touch screen T. On the screen, there are plural buttons (soft keys) 20 (system buttons) corresponding to individual systems of the aircraft. In the example, system buttons for the aircraft sub-systems "avionics", "propulsion", "thermal", "interiors" and "lights" are given. However, the number and meaning of these buttons is not limited to the given example. As indicated, proximate to any of the system buttons 20, a summary of disconnected equipment (such as particular LRUs) can be shown. For instance, in the given example, the general CB control page 10A indicates, within the avionics sub-system, satellite communication and FDR (Flight Data Recorder) to be disconnected, within the thermal sub-system fan and cabin temperature sensor, and within the "interiors" subsystem, the infotainment system. In addition, one or more buttons (soft keys) for other operations (only a single one is shown for simplicity) may be provided, such as for switching to a still higher level such as the above discussed Aircraft Summary page.

Pressing on an individual system button 20 (required system button) switches the display to a control page that allows high-level control over aircraft systems power, which will allow to operate all relevant CBs grouped together.

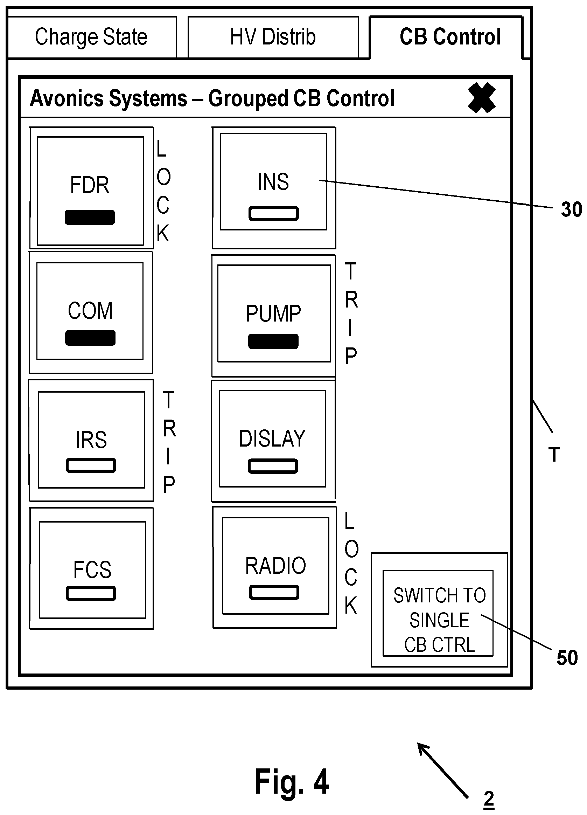

A respective example of such a control page is shown in Fig. 4. The shown display page corresponds to a second level display screen 2 of hierarchically organized display screens according to embodiments of the present invention.

In the given example, the page for grouped circuit breaker control for the avionics sub-system is shown. More specifically, in the given example, there are eight buttons (soft keys) 30 corresponding to eight groups of circuit breakers that are to be operated together in operation. In other words, the buttons 30 are operable representations of individual groups of circuit breakers (for simplicity of representation, the reference numeral 30 is shown only once). In the given example, there are shown buttons 30 for the groups of FDR, COM (communication, in particular, satellite communication), IRS (Inertial Reference System), INS (Inertial Navigation System), FCS (Flight Control System), pump, display, and radio. However, the present disclosure is not limited to this example, neither in number nor in meaning of the operable buttons 30. While depressed, the respective group of circuit breakers associated with powering the shown type of equipment will be operated together. A current status of each of the groups of circuit breakers is preferably indicated in association with the respective button 30. In the given example, this is done, in particular, by a bar-like display element within each button that may change color in accordance with the status of the respective group of circuit breakers. In the given example, a black bar element means that the respective CB group is in the "off" state, i.e. the associated components are disconnected, whereas a white bar element means that the respective CB group is in the "on" state so that the associated components are connected. However, neither the way of display of the status, nor the colors that have been chosen for simplicity of drawing are limited to those. For instance, in a real system an "on" state and an "off" state may be associated with green and red colors, respectively. Preferably, a status information is additionally provided indicating if at least one of the circuit breakers of the group is a different state to the others (for instance, tripped, locked, or out). In the particular example given, there is at least one tripped circuit breaker in the "pump" and "IRS" groups and there is at least one circuit breaker in locked state in the "FDR" and "Radio" groups. That means that the respective circuit breaker cannot be operated, at current. Of course, there may also be a specific indication such as by a predefined color of the button, in case a circuit breaker group as a whole is in "locked" state, i.e. is currently not operable.

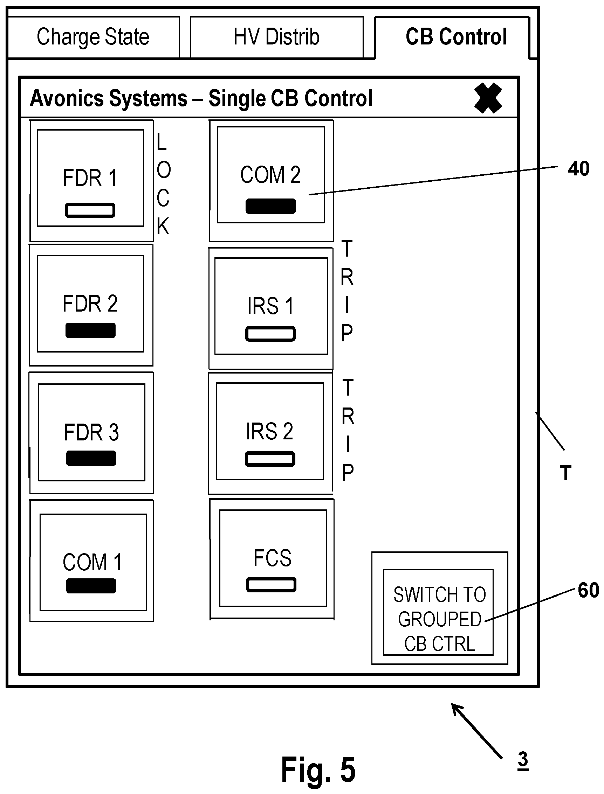

As indicated, operation ("pressing", i.e. touch operation) of a particular button 30 means status switch of the respective circuit breaker group between "on" and "off". The display screen further provides for additional navigation elements to switch to other views on the screen of the (interactive) display. In particular, there is an "x" symbol in the upper right portion of the screen which corresponds to the operation of "closing" the respective window, i.e. returning to the next higher level 1 showing a general page such as page 10A of Fig. 3. On the other hand, there is also navigation button 50 which is foreseen to switching to another display. In the given example, button 50 is foreseen to switch to a view (display screen) allowing for individual circuit breaker control. An example of such a screen is given in the following drawing of Fig. 5.

Fig. 5 shows an example of a display screen of an interactive display allowing for individual control of single circuit breakers. The indicated display corresponds to a third level display screen 3 of hierarchically organized display screens in accordance with embodiments of the present invention.

In the present example, individual circuit breakers of several groups of circuit breakers are represented by buttons (soft keys) 40 (each of which represents an "operable representation" of the respective circuit breaker). Again, for simplicity of illustration, a respective reference numeral 40 is shown only for a single one out of the buttons.

In the example, representations of individual circuit breakers out of several groups of the grouped circuit breaker control window 2 of Fig. 4 are shown. More specifically, single circuit control breaker window 3 of Fig. 5 shows individual circuit breakers of four (out of eight) circuit breaker groups illustrated in Fig. 4, namely circuit breaker groups "FDR" (three circuit breakers), "COM" (two circuit breakers), "IRS" (two circuit breakers) and "FCS" (one circuit breaker). However, this number in particular arrangement is an example only and, of course, the invention is not limited to this. For instance, there may be a situation, wherein a single CB control page shows individual circuit breakers belonging to a single CB group only. In any case, additional navigation elements (not shown) may be provided to switch between individual single CB control screens, as desired. Also, in the grouped CB control window 2, there may be several navigation elements such as provided close to a particular CB group or several CB groups, in order to switch to a different signal CB control windows for the respective group groups.

It is worth noticing that, generally speaking, in accordance with a preferred embodiment, the operation is implemented by means of touch operations on a touchscreen, by providing respective softkeys. However, the invention is not generally limited to this implementation and may be implemented by means of associating respective hardware keys with the individual operations.

In the given example, operation (touch operation) of a particular one of the indicated buttons (softkeys) 40 means triggering a status switch ("on" to "off" or vice versa) of the respective circuit breaker, depending on its current status. Again, the current status of the circuit breakers indicated in association with the respective representation of the circuit breaker (in the present case, again, by means of a white or black bar-like symbol directly on the respective button). In addition, further information about the respective circuit breaker such as "locked" or "tripped" may be indicated in association therewith, as shown, in the present case for the first circuit breaker of the FDR group, which is indicated locked in "off" state and the two circuit breakers of the IRS group that are in the tripped state. In addition, button 60 allows for switching back to the grouped circuit breaker control page 2. The same may be accomplished by operating the "x" symbol in the upper right area of the drawing.

Summarizing, the present invention relates to systems and methods for simplified, more efficient and more reliable aircraft control. In particular, the present invention relates to more efficient use of display capabilities, in particular, of interactive displays in monitoring, control, and operation of aircraft systems. According to a particular aspect, a common operation of groups of circuit breakers in an aircraft electrical system, preferably by means of an interactive display, is provided. The interactive display may be hierarchically organized into plural levels of display windows showing different levels of detail. In accordance with another particular aspect, a general synoptics summary display showing a status overview of all aircraft systems on a single display window is provided.

## Claims

1. A method of controlling circuit breakers of an electrical system of an aircraft, comprising the step of controlling a group of a plurality of circuit breakers, so as to switch them in the "on"-state or the "off"-state together, with a single operation.

2. A method according to claim 1, wherein the group includes a plurality of circuit breakers that are to be switched on or off together in flight operation.

3. A method according to claim 1 or 2, wherein the operation is implemented via an interactive display (T) displaying a representation (30) of a group of circuit breakers to be operated by single action via a touch operation.

4. A method according to claim 3, further comprising the step of switching to a display screen (3) indicating representations (40) of individual circuit breakers, so as to be individually operated, if desired.

5. A method according to claim 3 or 4, wherein the interactive display (T) is configured to display hierarchically organized display screens (1, 2, 3), wherein on a first level display screen (1) operable representations (20) of aircraft sub-systems each having one or more groups of circuit breakers (CB) is indicated, and on a second level display screen (2) an operable representation (30) of each of the groups of circuit breakers belonging to one of the aircraft sub-systems is indicated.

6. A method according to claim 5, further comprising the steps of:
switching the display screen from the first (1) to the second (2) level by operating the representation (20) of a respective aircraft sub-system, and
switching the display screen from the second (2) level back to the first (1) level by a dedicated screen operation.

7. A method according to claim 5 or 6, wherein the hierarchically organized display screens comprise a third level display screen (3) indicating operable representations (40) of individual circuit breakers of one or more groups.

8. A method according to claim 7, further comprising the step of switching between the second (2) and third (3) level display screen upon dedicated screen operations.

9. A method according to any of claims 3 to 8, wherein the representations (30) of the groups including an indication of status information of the respective group.

10. A method according to claim 9, wherein the status information including an indication if at least one of the circuit breakers of the group has a different state than the others.

11. An aircraft operation system being configured to control circuit breakers of an electrical system of an aircraft, the system being configured to control a group of a plurality of circuit breakers, so as to switch them in the "on"-state or the "off-state together, with a single operation.

12. A system according to claim 11 comprising a touchscreen (T) displaying a representation (30) of a group of circuit breakers to be operated in a single action wherein the operation is implemented via pointing to the representation (30) on the touchscreen (T).

13. A system according to claim 12, wherein the touchscreen (T) is configured to display hierarchically organized display screens (1, 2, 3), wherein on a first level display screen (1) operable representations (20) of aircraft sub-systems each having one or more groups of circuit breakers (CB) is indicated, and on a second level display screen (2) an operable representation (30) of each of the groups of circuit breakers (CB) belonging to one of the aircraft sub-systems is indicated.

14. A system according to claim 13, wherein the hierarchically organized display screens comprise a third level display screen (3) indicating operable representations (40) of individual circuit breakers of one or more groups.

15. A system according to any of claims 12 to 14, wherein the representations (30) of the groups including an indication of status information of the respective group.
